# EUROPÄISCHE PATENTSCHRIFT

(11) **EP 4 425 072 B1**
(45) Veröffentlichungstag und Bekanntmachung des Hinweises auf die Patenterteilung: **11.12.2024**
(21) Anmeldenummer: 23159593.5
(22) Anmeldetag: 02.03.2023
(51) Int. Cl.: F25B 15/04, F25B 25/02

(54) **SORPTIONSWÄRMEPUMPE UND -KREISPROZESS**
SORPTION HEAT PUMP AND LOOP PROCESS
POMPE À CHALEUR À SORPTION ET PROCÉDÉ

(43) Veröffentlichungstag der Anmeldung: 04.09.2024
(73) Patentinhaber: AGO Technologie GmbH, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 3 540 332
- EP-A1- 3 540 333

## Beschreibung

Die Erfindung betrifft zunächst eine Sorptionswärmepumpe mit gasförmigem Kältemittel und flüssigem Lösungsmittel, mit einer angereicherten Lösung und einer reichen Lösung, die einphasige Mischungen des Lösungsmittels und des Kältemittels sind, mit einer Absorptionseinheit, in der ein erster Teilstrom des Lösungsmittels in einem Mitteldruckabsorber auf einem Mitteldruckniveau einen Mitteldruckteilstrom und ein zweiter Teilstrom in einem Hochdruckabsorber auf einem Hochdruckniveau einen Hochdruckteilstrom des Kältemittels absorbiert und dabei jeweils entstehende Wärme an eine Wärmesenke außerhalb der Sorptionswärmepumpe abgibt, mit einem Austreiber, in dem die reiche Lösung aus der Absorptionseinheit auf einem Niederdruckniveau aus einer Wärmequelle außerhalb der Sorptionswärmepumpe Wärme aufnimmt und dabei das Kältemittel austreibt, mit einem Drosselventil, das die reiche Lösung nach Austritt aus der Absorptionseinheit zum Eintritt in den Austreiber vom Hochdruck auf den Niederdruck entspannt, und mit einer Pumpe und einem Verdichter, die das Lösungsmittel und das Kältemittel nach Austritt aus dem Austreiber vom Niederdruck auf den Mitteldruck pumpen. Die Erfindung betrifft weiterhin einen Sorptionskreisprozess in einer solchen Sorptionswärmepumpe.

Eine solche Sorptionswärmepumpe und ein solcher Sorptionskreisprozess sind aus EP 3 964 770 A1 und EP 3 540 332 A1 bekannt. Dort wird vorgeschlagen, zunächst das Lösungsmittel und das Kältemittel vom dem Niederdruckniveau auf das Hochdruckniveau zu pumpen und zum Hochdruckabsorber zu fördern und vor dem Hochdruckabsorber den Mitteldruckteilstrom auszukoppeln und auf das Mitteldruckniveau zu entspannen, so dass das Lösungsmittel zunächst nur den verbleibenden Hochdruckteilstrom, und die entstandene angereicherte Lösung anschließend in dem Mitteldruckabsorber den Mitteldruckteilstrom absorbiert.

### Aufgabe

Der Erfindung liegt die Aufgabe zugrunde, den Energiebedarf zum Erreichen des Hochdruckniveaus zu vermindern.

Die Aufgabe wird durch eine Sorptionswärmepumpe gemäß Anspruch 1 und durch einen Sorptionskreisprozess gemäß Anspruch 7 gelöst.

Eine solche erfindungsgemäße Sorptionswärmepumpe nimmt Wärme auf einem niedrigen Temperaturniveau auf und gibt sie auf einem höheren Niveau wieder ab.

Die reiche Lösung kühlt im Drosselventil ab und kann so die Niedertemperaturwärme aufnehmen. Das gasförmige Kältemittel und das flüssige Lösungsmittel werden getrennt der Absorptionseinheit zugeführt.

In der erfindungsgemäßen Sorptionswärmepumpe ist die Menge des Kältemittels, das in gasförmigem Aggregatzustand auf das Hochdruckniveau verdichtet wird, gegenüber dem Stand der Technik um den Mitteldruckteilstrom vermindert. Der hierdurch eingesparte Energieaufwand ist höher als der zusätzliche Energieaufwand zum Pumpen des zusätzlichen Massenstroms der angereicherten Lösung auf das Hochdruckniveau. Der zusätzliche Energiebedarf zum Pumpen der um den Mitteldruckteilstrom angereicherten Lösung ist geringer als der Energiebedarf zum Verdichten des Mitteldruckteilstroms.

Vorzugsweise weist eine erfindungsgemäße Sorptionswärmepumpe einen Zwischenkühler auf, in dem der Hochdruckteilstrom des Kältemittels auf dem Mitteldruckniveau Wärme abgibt. Viele Wärmepumpenanwendungen erfordern eine zweistufige Kältemittelverdichtung und Zwischenkühlung des Dampfes zwischen den Verdichtern, um das erforderliche Druckverhältnis zu erreichen, ohne dass der Kältemitteldampf während der Verdichtung unzulässig heiß wird. Insbesondere kann in dem Zwischenkühler die angereicherte Lösung auf dem Hochdruckniveau Wärme aufnehmen. In einer solchen erfindungsgemäßen Sorptionswärmepumpe kühlt die angereicherte Lösung den Hochdruckteilstrom und stellt die aufgenommene Wärme im Hochdruckabsorber für die Wärmesenke zur Verfügung.

Vorzugsweise weist eine erfindungsgemäße Sorptionswärmepumpe einen Lösungswärmeübertrager auf, in dem einer der Teilströme aus der reichen Lösung auf dem Hochdruckniveau Wärme aufnimmt. Die aufgenommene Wärme steht dann im Mitteldruckabsorber für die Wärmesenke zur Verfügung. Insbesondere kann das Lösungsmittel auf dem Mitteldruckniveau die Wärme aufnehmen.

Vorzugsweise weist eine erfindungsgemäße Sorptionswärmepumpe parallel zu dem Hochdruckabsorber einen Zusatzabsorber auf, in dem einer der Teilströme aus der reichen Lösung auf dem Hochdruckniveau Wärme aufnimmt. Wenn die Spreizung - also die Temperaturdifferenz zwischen Eintritt des Wärmeträgers in die und Austritt aus der Sorptionswärmepumpe - an der Wärmesenke deutlich größer ist als an der Wärmequelle, kann der Wärmeträger der Wärmesenke im Mitteldruckabsorber auf ein mittleres Temperaturniveau vorgewärmt werden. Die im Mitteldruckabsorber angereicherte Lösung wird so aber nahezu auf die Eintrittstemperatur der Wärmesenke abgekühlt. Vor Eintritt in den Hochdruckabsorber wird sie in einer solchen erfindungsgemäßen Sorptionswärmepumpe auf die Austrittstemperatur der Wärmesenke erwärmt. Insbesondere kann die angereicherte Lösung auf dem Hochdruckniveau die Wärme aufnehmen.

Vorzugsweise sind in einer erfindungsgemäßen Sorptionswärmepumpe der Mitteldruckabsorber und/oder der Hochdruckabsorber Plattenwärmetauscher. Solche Absorber sind technisch einfach, wartungsarm und stehen kostengünstig in einer Vielzahl von Ausführungen am Markt zur Verfügung.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Gemäß Anspruch 7 läuft der erfindungsgemäße Sorptionskreisprozess in einer erfindungsgemäßen Sorptionswärmepumpe ab und zeichnet sich gleichermaßen durch deren vorstehend beschriebene Vorteile aus. Vorzugsweise wird in einem erfindungsgemäßen Sorptionskreisprozess ein Wärmeträger der Wärmesenke in zwei parallel geführte Teilströme geteilt und an einen ersten der Teilströme die beim Absorbieren des Mitteldruckteilstroms und an einen zweiten der Teilströme die beim Absorbieren des Hochdruckteilstroms entstehende Wärme abgegeben und die Teilströme werden anschließend wieder zusammengeführt. Bei sehr unterschiedlichen Spreizungen an der Wärmequelle und der Wärmesenke wird in einem solchen erfindungsgemäßen Sorptionskreisprozess ein möglichst großer Mitteldruckteilstrom auf dem Mitteldruckniveau absorbiert und die dabei entstehende Wärme an den Wärmeträger der Wärmesenke abgegeben, um dort beispielsweise Dampf zu erzeugen. Damit das relativ trockene Kältemittel sich nicht im Mitteldruckabsorber mit dem Lösungsmittel sättigt, wird dem Mitteldruckabsorber nur so viel Kältemittel zugeführt, wie absorbiert werden kann. Nur das verbleibende Kältemittel wird zum Hochdruckabsorber geleitet.

Alternativ vorzugsweise wird in einem erfindungsgemäßen Sorptionskreisprozess an einen Wärmeträger der Wärmesenke zunächst die beim Absorbieren des Mitteldruckteilstroms und anschließend die beim Absorbieren des Hochdruckteilstroms entstehende Wärme abgegeben. Ist die Spreizung an der Wärmesenke viel größer als an der Wärmequelle, wird so der Wärmeträger der Wärmesenke im Mitteldruckabsorber vorgewärmt und erst im Hochdruckabsorber auf die gewünschte Ausgangstemperatur erwärmt.

Vorzugsweise wird in einem erfindungsgemäßen Sorptionskreisprozess das Lösungsmittel in den ersten Teilstrom und den zweiten Teilstrom geteilt. Der erste Teilstrom muss dann nach Absorbieren des Mitteldruckteilstroms nicht mehr auf das Hochdruckniveau gepumpt werden.

### Ausführungsbeispiele

Die Erfindung wird nachfolgend anhand von Ausführungsbeispielen erläutert. Es zeigen
- Fig. 1: eine erste erfindungsgemäße Sorptionswärmepumpe,
- Fig. 2: eine zweite erfindungsgemäße Sorptionswärmepumpe und
- Fig. 3: eine dritte erfindungsgemäße Sorptionswärmepumpe.

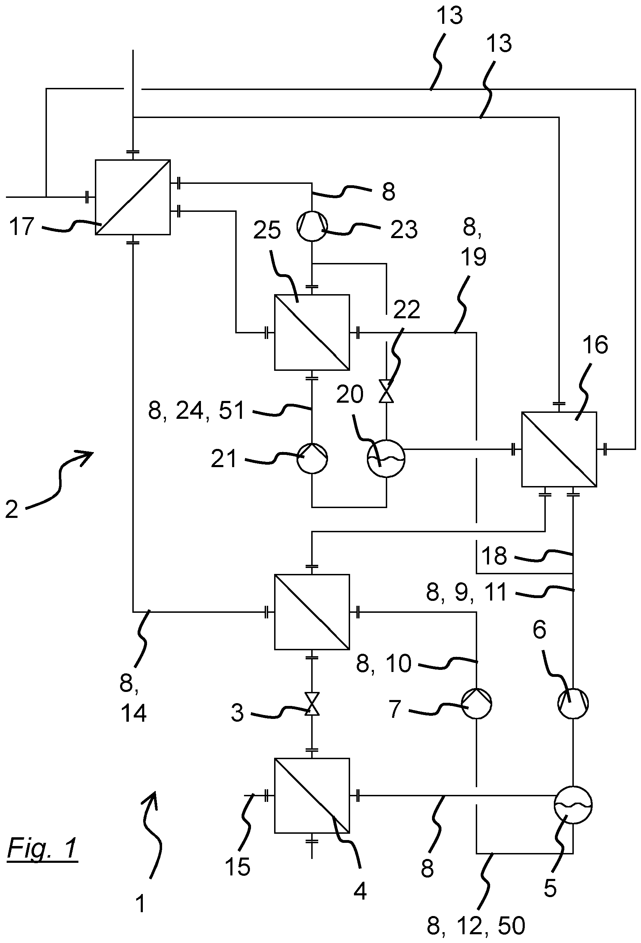

Die in Figur 1 gezeigte erste erfindungsgemäße Sorptionswärmepumpe 1 weist eine Absorptionseinheit 2, ein Drosselventil 3, einen Austreiber 4, einen Abscheider 5, einen Verdichter 6, eine Pumpe 7 sowie Rohrleitungen 8 auf, die die vorgenannten in dieser Reihenfolge zu einem kreisförmig geschlossenen System verbinden, wobei der Verdichter 6 in einem Kältemittelzweig 9 und die Pumpe 7 in einem parallel dazu verlaufenden Lösungsmittelzweig 10 vom Abscheider 5 zur Absorptionseinheit 2 angeordnet ist.

In einem Zyklus eines erfindungsgemäßen Sorptionskreisprozesses mit Ammoniak (NH₃) als Kältemittel 11 in Wasser als Lösungsmittel 12 absorbiert in der Absorptionseinheit 2 ein Strom von 3,3 kg/s des Lösungsmittel 12 einen Strom von 3,2 kg/s des Kältemittels 11 und gibt an eine Wärmesenke Heizleistung ab. Mit 100 °C in die Absorptionseinheit 2 eintretendes Speisewasser als Wärmeträger 13 der Wärmesenke tritt mit 110 °C als Sattdampf aus der Absorptionseinheit 2 aus. Ein mit 87 °C auf einem Hochdruckniveau von 48 bar aus der Absorptionseinheit 2 mit 6,5 kg/s austretender Strom reicher Lösung 14 wird durch das Drosselventil 3 auf einen Niederdruck von 6 bar entspannt und im Austreiber 4 aus einer Wärmequelle mit einer Leistung von 2610 kW auf 64 °C erhitzt. Der mit 70 °C in den Austreiber 4 eintretende Wärmeträger 15 der Wärmequelle wird hierbei auf 30 °C abgekühlt. Aus dem nachfolgenden Abscheider 5 wird der Strom des Lösungsmittels 12 durch die Pumpe 7 und der Strom des Kältemittels 11 durch den Verdichter 6 jeweils auf ein Mitteldruckniveau von 22 bar gepumpt und in die Absorptionseinheit 2 gefördert.

Die Absorptionseinheit 2 weist einen Mitteldruckabsorber 16 und einen Hochdruckabsorber 17 auf. Der Wärmeträger 13 der Wärmesenke wird vor Eintritt in den Mitteldruckabsorber 16 und den Hochdruckabsorber 17 zunächst in zwei Teilströme geteilt, der Mitteldruckabsorber 16 und der Hochdruckabsorber 17 werden von den Teilströmen parallel durchströmt und nach Austritt aus denselben werden die Teilströme wieder zusammengeführt. Das in die Absorptionseinheit 2 auf dem Mitteldruckniveau mit 160 °C eintretende Kältemittel 11 wird zunächst in einen Mitteldruckteilstrom 18 und einen Hochdruckteilstrom 19 geteilt. Im Mitteldruckabsorber 16 absorbiert ein erster Teilstrom 50 des Lösungsmittels 12 den Mitteldruckteilstrom 18 und gibt dabei eine Heizleistung von 303 kW an den Wärmeträger 13 der Wärmesenke ab.

Die Absorptionseinheit 2 weist einen Mitteldruckabscheider 20, eine Zwischenpumpe 21, ein Drosselventil 22 und einen Zwischenverdichter 23 auf. Eine aus dem Mitteldruckabsorber 16 mit 110 °C austretende angereicherte Lösung 24 scheidet im Mitteldruckabscheider 20 zunächst nicht absorbiertes Kältemittel 11 ab und wird von der Zwischenpumpe 21 in einem zweiten Teilstrom 51 auf das Hochdruckniveau und mit 3,7 kg/s in den Hochdruckabsorber 17 gepumpt. Das Kältemittel 11 aus dem Mitteldruckabscheider 20 wird über das Drosselventil 22 mit dem Hochdruckteilstrom 19 zusammengeführt, mit diesem gemeinsam in dem Zwischenverdichter 23 gleichfalls auf das Hochdruckniveau verdichtet und hierbei von 84 °C auf 155 °C erhitzt und mit 2,8 kg/s in den Hochdruckabsorber 17 geführt.

Die Absorptionseinheit 2 weist einen Zwischenkühler 25 und einen Lösungswärmeübertrager 26 auf. In dem Zwischenkühler 25 gibt der Hochdruckteilstrom 19 des Kältemittels 11 auf dem Mitteldruckniveau an die angereicherte Lösung 24 auf dem Hochdruckniveau Wärme ab und heizt diese auf 126 °C auf. In dem Lösungswärmeübertrager 26 nimmt das Lösungsmittel 12 auf dem Mitteldruckniveau Wärme aus der reichen Lösung 14 auf dem Hochdruckniveau auf.

Der Austreiber 4, der Mitteldruckabsorber 16, der Hochdruckabsorber 17, der Zwischenkühler 25 und der Lösungswärmeübertrager 26 sind Plattenwärmetauscher.

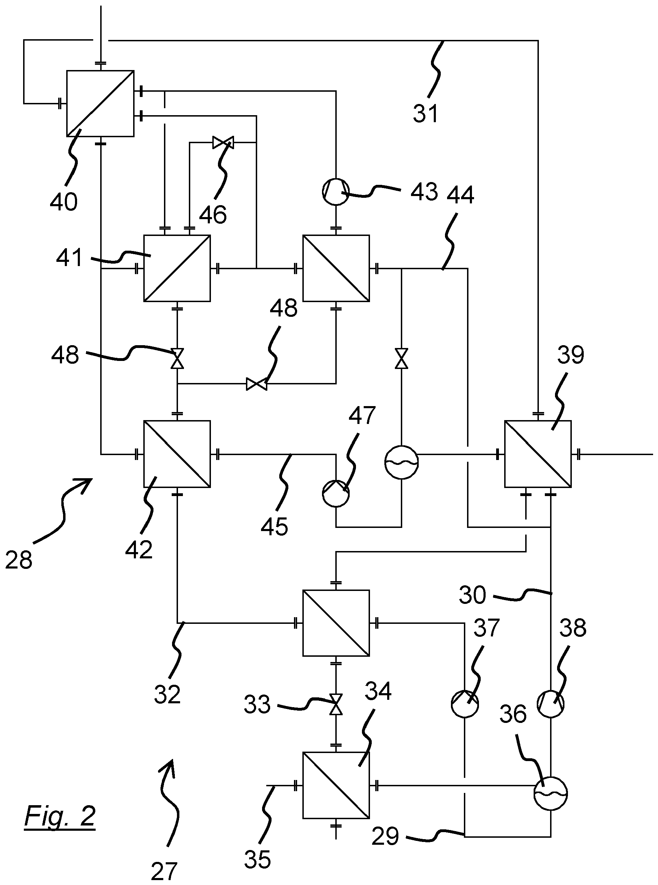

Die in Figur 2 gezeigte zweite erfindungsgemäße Sorptionswärmepumpe 27 und der darin ablaufende erfindungsgemäße Sorptionskreisprozess entsprechen im Wesentlichen der ersten Sorptionswärmepumpe 1. In einem Zyklus absorbiert in der Absorptionseinheit 28 der zweiten Sorptionswärmepumpe 27 ein Strom von 6,7 kg/s des Lösungsmittels 29 einen Strom von 3,9 kg/s des Kältemittels 30. Der Wärmeträger 31 der Wärmesenke tritt mit 60 °C in die Absorptionseinheit 28 ein. Ein unter 52 °C auf einem Hochdruckniveau von 45 bar aus der Absorptionseinheit 28 mit 11,2 kg/s austretender Strom reicher Lösung 32 wird durch das Drosselventil 33 auf einen Niederdruck von 7,3 bar entspannt und in dem Austreiber 34 mit einer Leistung von 4130 kW auf 38 °C erhitzt. Der unter 40 °C in den Austreiber 34 eintretende Wärmeträger 35 der Wärmequelle wird hierbei auf 35 °C abgekühlt. Aus dem nachfolgenden Abscheider 36 wird der Strom des Lösungsmittels 29 durch die Pumpe 37 und der Strom des Kältemittels 30 durch den Verdichter 38 jeweils auf ein Mitteldruckniveau von 28 bar gepumpt und in die Absorptionseinheit 28 gefördert.

Abweichend von der ersten Sorptionswärmepumpe 1 wird der Wärmeträger 31 der Wärmesenke zunächst in dem Mitteldruckabsorber 39 mit einer Heizleistung von 2047 kW auf 78 °C vorgewärmt und anschließend in dem Hochdruckabsorber 40 mit einer Heizleistung von 3464 kW weiter auf die Austrittstemperatur erhitzt. Zusätzlich weist die zweite Sorptionswärmepumpe 27 einen Zusatzabsorber 41 und einen weiteren Lösungswärmeübertrager 42 auf.

Der mit 155 °C aus dem Zwischenverdichter 43 austretende Hochdruckteilstrom 44 des Kältemittels 30 und die angereicherte Lösung 45 werden vor dem Hochdruckabsorber 40 geteilt und in je zwei Teilströmen parallel durch den Hochdruckabsorber 40 und den Zusatzabsorber 41 geführt, die jeweils austretenden Teilströme der reichen Lösung 32 werden anschließend wieder zusammengeführt. Der Teilstrom der angereicherten Lösung 45 im Zusatzabsorber 41 wird durch ein Drosselventil 46 gesteuert. Hinter der Zwischenpumpe 47 wird der aus dem Mitteldruckabsorber 39 mit 7,3 kg/s unter 63 °C austretende Strom der angereicherten Lösung 45 zunächst in dem weiteren Lösungswärmeübertrager 42 von der reichen 32 Lösung auf dem Hochdruckniveau auf 97 °C erhitzt. Die angereicherte Lösung 45 wird dann geteilt, durch zwei Drosselventile 48 gesteuert in Teilströmen mit je 3,65 kg/s parallel im Zwischenkühler 49 auf 112 °C und im Zusatzabsorber 41 auf 107 °C erhitzt, wieder zusammengeführt und unter 110 °C in den Hochdruckabsorber 40 und den Zusatzabsorber 41 geführt.

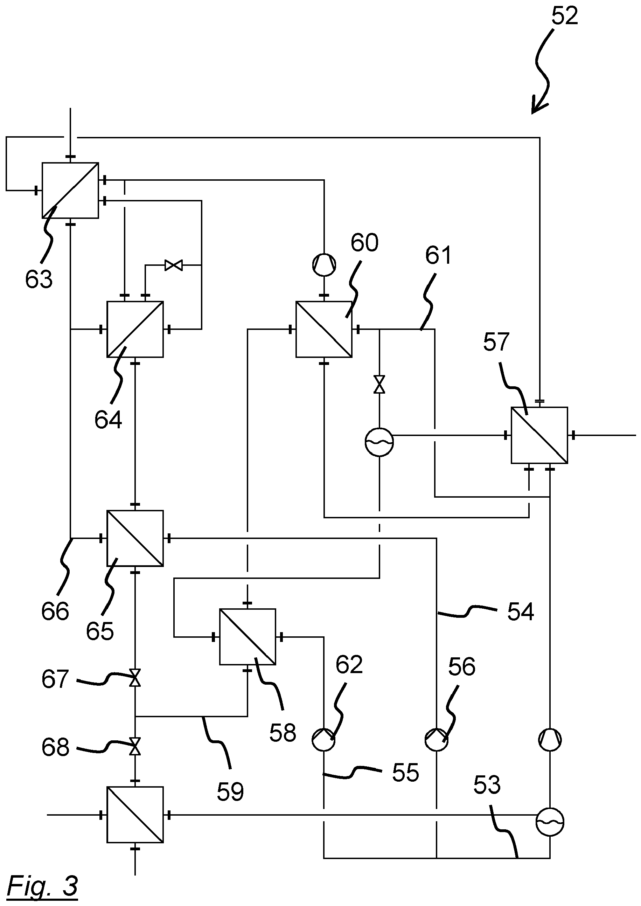

Die in Figur 3 gezeigte dritte erfindungsgemäße Sorptionswärmepumpe 52 und der darin ablaufende erfindungsgemäße Sorptionskreisprozess entsprechen im Wesentlichen der zweiten Sorptionswärmepumpe 27. Abweichend wird das Lösungsmittel 53 in einen ersten Teilstrom 54 und einen zweiten Teilstrom 55 geteilt.

Der erste Teilstrom 54 wird mit einer ersten Pumpe 56 auf das Mitteldruckniveau gepumpt und zum Mitteldruckabsorber 57 gefördert. Vor dem Mitteldruckabsorber 57 gibt der erste Teilstrom 54 des Lösungsmittels 53 in einem Lösungswärmeübertrager 58 Wärme aus der reichen Lösung 59 aus dem Mitteldruckabsorber 57 und im Zwischenkühler 60 aus den Hochdruckteilstrom 61 auf.

Der zweite Teilstrom 55 wird mit einer zweiten Pumpe 62 auf das Hochdruckniveau gepumpt und zum Hochdruckabsorber 63 und zum Zusatzabsorber 64 gefördert. Auf dem Hochdruckniveau nimmt der zweite Teilstrom 55 in einem weiteren Lösungswärmeübertrager 65 Wärme aus der reichen Lösung 66 aus dem Hochdruckabsorber 63 und dem Zusatzabsorber 64 auf.

Die reiche Lösung 66 aus dem Hochdruckabsorber 63 und dem Zusatzabsorber 64 wird zunächst in einem Zwischendrosselventil 67 auf das Mitteldruckniveau entspannt, mit der reichen Lösung 59 aus dem Mitteldruckabsorber zusammengeführt und erst dann in dem Drosselventil 68 auf das Niederdruckniveau entspannt.

In den Figuren sind
- 1: Sorptionswärmepumpe
- 2: Absorptionseinheit
- 3: Drosselventil
- 4: Austreiber
- 5: Abscheider
- 6: Verdichter
- 7: Pumpe
- 8: Rohrleitung
- 9: Kältemittelzweig
- 10: Lösungsmittelzweig
- 11: Kältemittel
- 12: Lösungsmittel
- 13: Wärmeträger der Wärmesenke
- 14: reiche Lösung
- 15: Wärmeträger der Wärmequelle
- 16: Mitteldruckabsorber
- 17: Hochdruckabsorber
- 18: Mitteldruckteilstrom
- 19: Hochdruckteilstrom
- 20: Mitteldruckabscheider
- 21: Zwischenpumpe
- 22: Drosselventil
- 23: Zwischenverdichter
- 24: angereicherte Lösung
- 25: Zwischenkühler
- 26: Lösungswärmeübertrager
- 27: Sorptionswärmepumpe
- 28: Absorptionseinheit
- 29: Lösungsmittel
- 30: Kältemittel
- 31: Wärmeträger der Wärmesenke
- 32: reiche Lösung
- 33: Drosselventil
- 34: Austreiber
- 35: Wärmeträger der Wärmequelle
- 36: Abscheider
- 37: Pumpe
- 38: Verdichter
- 39: Mitteldruckabsorber
- 40: Hochdruckabsorber
- 41: Zusatzabsorber
- 42: weiterer Lösungswärmeübertrager
- 43: Zwischenverdichter
- 44: Hochdruckteilstrom
- 45: angereicherte Lösung
- 46: Drosselventil
- 47: Zwischenpumpe
- 48: Drosselventil
- 49: Zwischenkühler
- 50: erster Teilstrom des Lösungsmittels
- 51: zweiter Teilstrom des Lösungsmittels
- 52: Sorptionswärmepumpe
- 53: Lösungsmittel
- 54: erster Teilstrom des Lösungsmittels
- 55: zweiter Teilstrom des Lösungsmittels
- 56: erste Pumpe
- 57: Mitteldruckabsorber
- 58: Lösungswärmeübertrager
- 59: reiche Lösung
- 60: Zwischenkühler
- 61: Hochdruckteilstrom
- 62: zweite Pumpe
- 63: Hochdruckabsorber
- 64: Zusatzabsorber
- 65: Lösungswärmeübertrager
- 66: reiche Lösung
- 67: Zwischendrosselventil
- 68: Drosselventil

## Patentansprüche

1. Sorptionswärmepumpe (1, 27, 52)
• mit gasförmigem Kältemittel (11, 30) und flüssigem Lösungsmittel (12, 29, 53),
• mit einer angereicherten Lösung (24, 45) und einer reichen Lösung (14, 32, 59, 66), die einphasige Mischungen des Lösungsmittels (12, 29, 53) und des Kältemittels (11, 30) sind,
• mit einer Absorptionseinheit (2, 28), in der ein erster Teilstrom (50, 54) des Lösungsmittels (12, 29, 53) in einem Mitteldruckabsorber (16, 39, 57) auf einem Mitteldruckniveau einen Mitteldruckteilstrom (18) und ein zweiter Teilstrom (51, 55) in einem Hochdruckabsorber (17, 40 63) auf einem Hochdruckniveau einen Hochdruckteilstrom (19, 44) des Kältemittels (11, 30) absorbiert und dabei jeweils entstehende Wärme an eine Wärmesenke außerhalb der Sorptionswärmepumpe (1, 27, 52) abgibt,
• mit einem Austreiber (4, 34), in dem die reiche Lösung (14, 32) aus der Absorptionseinheit (2, 28) auf einem Niederdruckniveau aus einer Wärmequelle außerhalb der Sorptionswärmepumpe (1, 27, 52) Wärme aufnimmt und dabei das Kältemittel (11, 30) austreibt,
• mit einem Drosselventil (3, 33, 68), das die reiche Lösung (14, 32) nach Austritt aus der Absorptionseinheit (2, 28) zum Eintritt in den Austreiber (4, 34) vom Hochdruck auf den Niederdruck entspannt, und
• mit einer Pumpe (7, 37, 56) und einem Verdichter (6, 38), die das Lösungsmittel (12, 29) und das Kältemittel (11, 30) nach Austritt aus dem Austreiber (4, 34) vom Niederdruck auf den Mitteldruck pumpen,
mit einem Zwischenverdichter (23, 43), der den Hochdruckteilstrom (19, 44) des Kältemittels (11, 30) von dem Mitteldruckniveau auf das Hochdruckniveau verdichtet und auf dem Hochdruckniveau in den Hochdruckabsorber (17, 40 63) fördert, **gekennzeichnet durch** eine Zwischenpumpe (21, 47), die die im Mitteldruckabsorber (16, 39, 57) entstandene angereicherte Lösung (24, 45) auf das Hochdruckniveau pumpt und auf dem Hochdruckniveau in den Hochdruckabsorber (17, 40, 63) fördert.

2. Sorptionswärmepumpe (1, 27, 52) nach nach dem vorgenannten Anspruch, ***gekennzeichnet durch*** einen Zwischenkühler (25, 49, 60), in dem der Hochdruckteilstrom (19, 44) des Kältemittels (11, 30) auf dem Mitteldruckniveau Wärme insbesondere an die angereicherte Lösung (24, 45) auf dem Hochdruckniveau abgibt.

3. Sorptionswärmepumpe (1, 27, 52) nach einem der vorgenannten Ansprüche, ***gekennzeichnet durch*** einen Lösungswärmeübertrager (26, 58, 65), in dem einer der Teilströme (50, 51, 54, 55) aus der reichen Lösung (14, 32, 66) auf dem Hochdruckniveau Wärme aufnimmt.

4. Sorptionswärmepumpe (27, 52) nach einem der vorgenannten Ansprüche, ***gekennzeichnet durch*** einen parallel zu dem Hochdruckabsorber (17, 40, 63) angeordneten Zusatzabsorber (41 64), in dem einer der Teilströme (50, 51, 54, 55) auf dem Hochdruckniveau Wärme aufnimmt.

5. Sorptionswärmepumpe (1, 27, 52) nach einem der vorgenannten Ansprüche, ***dadurch gekennzeichnet, dass*** der Mitteldruckabsorber (16, 39 57) und/oder der Hochdruckabsorber (17, 40, 63) Plattenwärmetauscher sind.

6. Sorptionswärmepumpe (1, 27, 52) nach einem der vorgenannten Ansprüche, ***dadurch gekennzeichnet, dass*** das Lösungsmittel (12, 29, 53) Wasser und das Kältemittel (11, 30) Ammoniak ist.

7. Sorptionskreisprozess einer Sorptionswärmepumpe gemäß Anspruch 1
• mit gasförmigem Kältemittel (11, 30) und flüssigem Lösungsmittel (12, 29, 53),
• mit einer angereicherten Lösung (24, 45) und einer reichen Lösung (14, 32, 59, 66), die einphasige Mischungen des Lösungsmittels (12, 29, 53) und des Kältemittels (11, 30) sind,
• wobei ein erster Teilstrom (50, 54) des Lösungsmittels (12, 29, 53) auf einem Mitteldruckniveau einen Mitteldruckteilstrom (18) und ein zweiter Teilstrom (51, 55) auf einem Hochdruckniveau einen Hochdruckteilstrom (19, 44) des Kältemittels (11, 30) absorbiert und dabei jeweils entstehende Wärme an eine Wärmesenke außerhalb des Sorptionskreisprozesses abgibt,
• wobei die nach Absorption des Kältemittels (11, 30) entstandene reiche Lösung (14, 32, 59, 66) auf ein Niederdruckniveau entspannt wird und auf dem Niederdruckniveau aus einer Wärmequelle außerhalb des Sorptionskreisprozesses Wärme aufnimmt und dabei das Kältemittel (11, 30) austreibt und
• wobei das Lösungsmittel (12, 29) und das Kältemittel (11, 30) vom Niederdruck auf den Mitteldruck gepumpt werden,
wobei nur der Hochdruckteilstrom (19, 44) des Kältemittels (11, 30) von dem Mitteldruckniveau auf das Hochdruckniveau verdichtet wird, **dadurch gekennzeichnet, dass** die mit dem Mitteldruckteilstrom (18) angereicherte Lösung (24, 45) von dem Mitteldruckniveau auf das Hochdruckniveau gepumpt wird.

8. Sorptionskreisprozess nach dem vorgenannten Anspruch, ***dadurch gekennzeichnet, dass*** ein Wärmeträger (13) der Wärmesenke in zwei parallel geführte Teilströme geteilt und an einen ersten der Teilströme des Wärmeträgers (13) die beim Absorbieren des Mitteldruckteilstroms (18) und an einen zweiten der Teilströme des Wärmeträgers (13) die beim Absorbieren des Hochdruckteilstroms (19, 44) entstehende Wärme abgegeben wird und die Teilströme des Wärmeträgers (13) anschließend wieder zusammengeführt werden.

9. Sorptionskreisprozess nach Anspruch 7, ***dadurch gekennzeichnet, dass*** an einen Wärmeträger (31) der Wärmesenke zunächst die beim Absorbieren des Mitteldruckteilstroms und anschließend die beim Absorbieren des Hochdruckteilstroms (44) entstehende Wärme abgegeben wird.

10. Sorptionskreisprozess nach einem der Ansprüche 7 bis 9, ***dadurch gekennzeichnet, dass*** das Lösungsmittel (53) in den ersten Teilstrom (54) und den zweiten Teilstrom (55) geteilt wird.

## Claims

1. A sorption heat pump (1, 27, 52)
- with a gaseous refrigerant (11, 30) and a liquid solvent (12, 29, 53),
- with a enriched solution (24, 45) and a rich solution (14, 32, 59, 66), which are one phase mixes of the solvent (12, 29, 53) and the refrigerant (11, 30),
- with an absorption unit (2, 28) in which a first partial flow (50, 54) of the solvent (12, 29, 53) absorbs a medium-pressure partial flow (18) of the refrigerant (11, 30) in a medium-pressure absorber (16, 39, 57) at a medium pressure level, and a second partial flow (51, 55) of the solvent (12, 29, 53) absorbs a high-pressure partial flow 19, 44) of the refrigerant (11, 30) in a high-pressure absorber (17, 40, 63) at a high-pressure level, and wherein the first partial flow and the second partial flow emit respective absorption generated heat to a heat sink outside of the sorption heat pump (1, 27, 52),
- with an expeller (4, 34) in which the rich solution (14, 32) from the absorption unit (2, 28) absorbs heat at a low-pressure level from a heat source outside of the sorption heat pump (1, 27, 52) and thus expels the refrigerant (11, 30),
- with an expansion valve (3, 33, 68) which expands the rich solution (14, 32) from the high-pressure level to the low-pressure level after exiting the absorption unit (2, 28) and before entering the expeller (4, 34), and
- with a pump (7, 37, 56) and a compressor (6, 38) that pump the solvent (12, 29) and the refrigerant (11, 30) from the low-pressure level to the medium pressure level after exiting the expeller (4, 34),
- with an intermediary compressor (23, 43) that compresses the high-pressure partial flow (19, 44) of the refrigerant (11, 30) from the medium pressure level to the high-pressure level and that feeds the high-pressure partial flow of the refrigerant at the high-pressure level into the high-pressure absorber (17, 40, 63),
**characterized by** an intermediary pump (21, 47) that pumps the enriched solution (24, 45) exiting from the medium pressure absorber (16, 39, 57) to the high-pressure level and feeds the enriched solution at the high-pressure level into the high-pressure absorber (17, 40, 63).

2. The sorption heat pump (1, 27, 52) according to the preceding claim, **characterized by** an intercooler (25, 49, 60) in which the high-pressure partial flow (19, 44) of the refrigerant (11, 30) emits heat at the medium pressure level in particular to the enriched solution (24, 45) at the high-pressure level.

3. The sorption heat pump (1, 27 ,52) according to one of the preceding claims, **characterized by** a solution heat exchanger (26, 58, 65) in which one of the partial flows (50, 51, 54, 55) absorbs heat from the rich solution (14, 32, 66) at the high-pressure level.

4. The sorption heat pump (27, 52) according to one of the preceding claims, **characterized by** an additional absorber (41, 64) arranged parallel to the high-pressure absorber (17, 40, 63), wherein one of the partial flows (50, 51, 54, 55) absorbs heat at the high-pressure level in the additional absorber.

5. The sorption heat pump (1, 27, 52) according to one of the preceding claims, **characterized in that** the medium pressure absorber (16, 39, 57) and/or the high-pressure absorber (17, 40, 63) are plate heat exchangers.

6. The sorption heat pump (1, 27 52) according one of the preceding claims, **characterized in that** the solvent (12, 29, 53) is water and the refrigerant (11, 30) is ammonia.

7. A sorption cycle of the sorption heat pump according to claim 1
- with a gaseous refrigerant (11, 30) and a liquid solvent (12, 29, 53),
- with a enriched solution (24, 45) and a rich solution (14, 32, 59, 66), which are one phase mixes of the solvent (12, 29, 53) and the refrigerant (11, 30),
- wherein a first partial flow (50, 54) of the solvent (12, 29, 53) absorbs a medium-pressure partial flow (18) of the refrigerant (11, 30) at a medium pressure level and a second partial flow (51, 55) of the solvent (12, 29, 53) absorbs a high-pressure partial flow (19, 44) of the refrigerant (11, 30) at a high-pressure level, and wherein the first partial flow and the second partial flow emit respective absorption generated heat to a heat sink outside of the sorption cycle,
- wherein the rich solution (14, 32, 59, 66) generated by absorbing the refrigerant (11, 30) is expanded to a low-pressure level and absorbs heat from a heat source outside of the sorption cycle and thus expels the refrigerant (11, 30),
- wherein the solvent (12, 29) and the refrigerant (11, 30) are pumped from the low-pressure level to the medium pressure level,
- wherein only the high-pressure partial flow (19, 44) of the refrigerant (11, 30) is compressed from the medium pressure level to the high-pressure level,
**characterized in that** the solution (24, 45) enriched by the medium pressure partial flow (18) is pumped from the medium pressure level to the high-pressure level.

8. The sorption cycle according to the preceding claim, **characterized in that** a heat carrier (13) of the heat sink is divided into two partial flows run in parallel wherein heat generated by absorbing the medium pressure partial flow (18) is emitted to a first partial flow of the two partial flows of the heat carrier (13) and heat generated by absorbing the high-pressure partial flow (19, 44) is emitted to a second partial flow of the partial flows of the heat carrier (13) and wherein the partial flows of the heat carrier (13) are subsequently joined again.

9. The sorption cycle according to claim 7, **characterized in that** heat generated by absorbing the medium pressure partial flow is initially emitted to a heat carrier (31) of the heat sink and subsequently heat generated by absorbing the high-pressure partial flow (44) is subsequently emitted to the heat carrier (31) of the heat sink.

10. The sorption cycle according to one of the claims 7 through 9, **characterized in that** the solvent (53) is divided into the first partial flow (54) and the second partial flow (55).

## Revendications

1. Thermopompe à sorption (1, 27, 52)
• comprenant un agent réfrigérant (11, 30) gazeux et un solvant (12, 29, 53) liquide,
• comprenant une solution (24, 45) enrichie et une solution (14, 32, 59, 66) riche, qui sont des mélanges monophasés du solvant (12, 29, 53) et de l'agent réfrigérant (11, 30),
• comprenant une unité d'absorption (2, 28), dans laquelle un premier flux partiel (50, 54) du solvant (12, 29, 53) absorbe dans un absorbeur moyenne pression (16, 39, 57) à un niveau de moyenne pression un flux partiel à moyenne pression (18) et un deuxième flux partiel (51, 55) absorbe dans un absorbeur haute pression (17, 40, 63) à un niveau de haute pression un flux partiel à haute pression (19, 44) de l'agent réfrigérant (11, 30) et restitue de la chaleur respectivement produite à cet effet à un dissipateur thermique à l'extérieur de la thermopompe à sorption (1, 27, 52),
• comprenant un bouilleur (4, 34), dans lequel la solution (14, 32), issue de l'unité d'absorption (2, 28) absorbe de la chaleur à un niveau de basse pression à partir d'une source de chaleur à l'extérieur de la thermopompe à sorption (1, 27, 52) et expulse à cet effet l'agent réfrigérant (11, 30),
• comprenant une soupape d'étranglement (3, 33, 68), qui après sa sortie de l'unité d'absorption (2, 28) détend la solution (14, 32) riche de la haute pression à la basse pression, pour son entrée dans le bouilleur (4, 34) et
• comprenant une pompe (7, 37, 56) et un compresseur (6, 38), qui après sa sortie du bouilleur (4, 34), pompent le solvant (12, 29) et l'agent réfrigérant (11, 30) de la basse pression à la moyenne pression,
comprenant un compresseur intermédiaire (23, 43), qui comprime le flux partiel à haute pression (19, 44) de l'agent réfrigérant (11, 30) du niveau de moyenne pression au niveau de haute pression et le transporte au niveau de haute pression dans l'absorbeur haute pression (17, 40 63),
**caractérisée par** une pompe intermédiaire (21, 47), qui pompe la solution (24, 45) enrichie produite dans l'absorbeur moyenne pression (16, 39, 57) au niveau de haute pression et la transporte au niveau de haute pression dans l'absorbeur haute pression (17, 40, 63).

2. Thermopompe à sorption (1, 27, 52) selon la revendication précédente, **caractérisée par** un refroidisseur intermédiaire (25, 49, 60), dans lequel le flux partiel à haute pression (19, 44) de l'agent réfrigérant (11, 30) restitue au niveau de moyenne pression de la chaleur notamment à la solution (24, 45) enrichie, au niveau de haute pression.

3. Thermopompe à sorption (1, 27, 52) selon l'une quelconque des revendications précédentes, **caractérisée par** un échangeur de chaleur de solution (26, 58, 65), dans lequel l'un des flux partiels (50, 51, 54, 55) absorbe de la chaleur au niveau de haute pression à partir de la solution (14, 32, 66) riche.

4. Thermopompe à sorption (27, 52) selon l'une quelconque des revendications précédentes, **caractérisée par** absorbeur additionnel (41, 64), placé à la parallèle de l'absorbeur haute pression (17, 40, 63), dans lequel l'un des flux partiels (50, 51, 54, 55) absorbe de la chaleur au niveau de haute pression.

5. Thermopompe à sorption (1, 27, 52) selon l'une quelconque des revendications précédentes, **caractérisé en ce que** l'absorbeur moyenne pression (16, 39, 57) et / ou l'absorbeur haute pression (17, 40, 63) sont des échangeurs thermiques à plaque.

6. Thermopompe à sorption (1, 27, 52) selon l'une quelconque des revendications précédentes, **caractérisé en ce que** le solvant (12, 29, 53) est de l'eau et l'agent réfrigérant (11, 30) est de l'ammoniac.

7. Processus de circuit de sorption d'une thermopompe à sorption selon la revendication 1,
• comprenant un agent réfrigérant (11, 30) gazeux et un solvant (12, 29, 53) liquide ,
• comprenant une solution (24, 45) enrichie et une solution (14, 32, 59, 66) riche, qui sont des mélanges monophasés du solvant (12, 29, 53) et de l'agent réfrigérant (11, 30),
• un premier flux partiel (50, 54) du solvant (12, 29, 53) absorbant à un niveau de moyenne pression un flux partiel à moyenne pression (18) et un deuxième flux partiel (51, 55) absorbant à un niveau de haute pression un flux partiel à haute pression (19, 44) de l'agent réfrigérant (11, 30) et à cet effet restituant de la chaleur respectivement produite à un dissipateur thermique à l'extérieur du processus de circuit de sorption,
• la solution (14, 32, 59, 66) riche produite après l'absorption de l'agent réfrigérant (11, 30) étant détendue à un niveau de basse pression et au niveau de basse pression, absorbant de la chaleur à partir d'une source de chaleur, à l'extérieur du processus de circuit de sorption et expulsant à cet effet l'agent réfrigérant (11, 30) et
• le solvant (12, 29) et l'agent réfrigérant (11, 30) étant pompés de la basse pression à la moyenne pression,
• uniquement le flux partiel à haute pression (19, 44) de l'agent réfrigérant (11, 30) étant comprimé du niveau de moyenne pression au niveau de haute pression, **caractérisé en ce que** la solution (24, 45) enrichie avec le flux partiel à moyenne pression (18) est pompée du niveau de moyenne pression au niveau de haute pression.

8. Processus de circuit de sorption selon la revendication précédente, **caractérisé en ce qu'**un agent caloporteur (13) du dissipateur thermique est divisé en deux flux partiels guidés en parallèle et **en ce que** la chaleur produite lors de l'absorption du flux partiel à moyenne pression (18) est restituée à un premier des flux partiels de l'agent caloporteur (13) et la chaleur produite lors de l'absorption du flux partiel à haute pression (19, 44) est restituée à un deuxième des flux partiels de l'agent caloporteur (13) et **en ce que** les flux partiels de l'agent caloporteur (13) sont à nouveau réunis par la suite.

9. Processus de circuit de sorption selon la revendication 7, **caractérisé en ce qu'**à un agent caloporteur (31) du dissipateur thermique est restituée d'abord la chaleur produite lors de l'absorption du flux partiel à moyenne pression et par la suite, la chaleur produite lors de l'absorption du flux partiel à haute pression (44).

10. Processus de circuit de sorption selon l'une quelconque des revendications 7 à 9, **caractérisé en ce que** le solvant (53) est divisé en le premier flux partiel (54) et en le deuxième flux partiel (55).
